# EUROPÄISCHE PATENTSCHRIFT

(11) **EP 2 861 480 B1**
(45) Veröffentlichungstag und Bekanntmachung des Hinweises auf die Patenterteilung: **16.03.2016**
(21) Anmeldenummer: 13724252.5
(22) Anmeldetag: 21.05.2013
(51) Int. Cl.: B62D 5/04, B62D 15/02

(54) **VERSTELLVORRICHTUNG FÜR EIN FAHRWERK EINES FAHRZEUGS MIT GLEITSTEIN**
ADJUSTMENT DEVICE FOR A VEHICLE CHASSIS, COMPRISING A SLIDING PAD
DISPOSITIF DE RÉGLAGE DU CHÂSSIS D'UN VÉHICULE COMPORTANT UNE BRIDE COULISSANTE

(30) Priorität: 18.06.2012 DE 102012210225
(43) Veröffentlichungstag der Anmeldung: 22.04.2015
(73) Patentinhaber: ZF Friedrichshafen AG, 88038 Friedrichshafen (DE)
(72) Erfinder: KUHNT, Torsten, 49356 Diepholz (DE)
(86) Internationale Anmeldenummer: PCT/EP2013/060344
(87) Internationale Veröffentlichungsnummer: WO 2013/189679

(56) Entgegenhaltungen:
- WO-A1-2005/090144

## Beschreibung

Die vorliegende Erfindung betrifft eine Verstellvorrichtung für ein Fahrwerk eines Fahrzeugs, umfassend mindestens eine Spindel, mindestens einen Gleitstein, eine Axialführung für den Gleitstein und mindestens ein Verbindungselement, welches Verbindungselement einerseits drehfest an der Spindel angeordnet und andererseits mit dem Gleitstein verbunden ist.

Ein Ziel bei Fahrwerksentwicklungen liegt darin, möglichst robuste, verschleißarme Baugruppen zur Verfügung zu stellen.

Aus dem Stand der Technik sind Verstellvorrichtungen mit Gleitsteinen bekannt, bei denen die Gleitsteine fest, d.h. ohne Freiheitsgrade einer Relativbewegung, mit der Spindel verbunden und in einer Führung längst der Spindelachse (Axialführung) geführt sind. Nachteilig hierbei ist, dass hohe Anforderungen hinsichtlich der Toleranzen an die Verbindung bestehen. Das System neigt sonst zum Kantentragen, wodurch ein stetiger Verschleiß des Systems und ein wachsendes Spiel hervorgerufen werden. Als Beispiels hierfür lässt sich die EP 1 911 660 A1 anführen, aus der eine Anbindung des Gleitsteines an der Spindel mittels einer Schraubverbindung bekannt ist.

Eine alternative Anbindung aus dem Stand der Technik sieht eine Anbindung mittels Passfedern vor, wobei die Spindel mehrteilig ausgebildet ist. Nachteilig hierbei ist, dass die Montage sehr zeitaufwändig und kompliziert ist. Die Verbindung neigt weiterhin zum Verklemmen und ist hinsichtlich der Geräuschentwicklung von Nachteil.

Die WO 2005/090144 A1 zeigt einen linearen elektromechanischen Aktuator für ein Lenkungssystem eines angetriebenen Fahrzeugs. Der mit zwei Motoren ausgestattete Aktuator weist eine zentrale Mutter auf, die durch Verbindungselemente in Form von Schrauben verdrehfest angeordnet ist.

Der Erfindung liegt die Aufgabe zugrunde, eine verschleißarme, kostengünstige Verstellvorrichtung zur Verfügung zu stellen, welche die obenstehenden Nachteile aus dem Stand der Technik überwindet.

Gelöst ist diese Aufgabe durch eine Verstellvorrichtung für ein Fahrwerk eines Fahrzeugs gemäß Anspruch 1. Vorteilhafte Weiterbildungen der erfindungsgemäßen Verstellvorrichtung finden sich in den Unteransprüchen 2 bis 15. Hiermit wird der Wortlaut dieser Unteransprüche durch ausdrückliche Bezugnahme in die Beschreibung aufgenommen, um Textwiederholungen möglichst zu vermeiden.

Die erfindungsgemäße Verstellvorrichtung umfasst mindestens eine Spindel, mindestens einen Gleitstein, eine Axialführung für den Gleitstein und mindestens ein Verbindungselement, welches Verbindungselement einerseits drehfest an der Spindel angeordnet und andererseits mit dem Gleitstein verbunden ist. Die erfindungsgemäße Verstellvorrichtung zeichnet sich dadurch aus, dass zwischen dem Verbindungselement und dem Gleitstein eine Gelenkverbindung vorgesehen ist. Die Anbindung des Gleitsteines an das Verbindungselement erfolgt demnach erfindungsgemäß mittels einer gelenkigen Verbindung. Dies ermöglicht eine an die Abmessungen und die Konstruktion insbesondere der Axialführung angepasste Ausrichtung und Positionierung des Gleitsteines, wodurch die Montage im Vergleich mit dem vorbekannten Stand der Technik vereinfacht und die Lebensdauer der Anordnung erhöht wird.

Eine vorteilhafte Ausführungsform der erfindungsgemäßen Verstellvorrichtung ist dadurch gekennzeichnet, dass der Abstand der Gelenkverbindung zu der Spindelachse im Bereich von 5-50mm, vorzugsweise im Bereich 10-30mm, höchst vorzugsweise im Bereich 15-25mm, liegt. Dies erweist sich nach Untersuchungen der Anmelderin zufolge als besonders vorteilhaft.

Vorteilhafterweise ist der Gleitstein zumindest an seinen mit der Axialführung in Kontakt stehenden Gleitflächen oder Kufen in Polyacetal (auch Polyoxymethylen oder POM genannt) oder einem glasfaserverstärktem POM oder einem hochtemperaturfesten Material, vorzugsweise PTFE (Polytetraflourethylen) oder PTFE oder Polyphenylensulfid (PPS), wie z.B. PPS GF40 PTFE5 (einem PPS mit 40% Glasfaseranteil), ausgebildet. Eine Ausbildung zumindest eines Teils des Gleitsteines in Polyacetal (POM) verringert die Geräuschentwicklung bei einem Gleiten des Gleitsteines an der Gleitfläche der Axialführung. Zusätzliche oder alternativ hierzu kommt ein oben genanntes hochtemperaturfestes Material in Frage. Hochtemperaturfest im erfindungsgemäßen Sinne sind Temperaturen im Bereich größer 80°C.

Eine weitere bevorzugte Ausführungsform der erfindungsgemäßen Verstellvorrichtung sieht vor, dass das Gelenk der Gelenkverbindung blockierbar ist. Nach einem Anpassen der Ausrichtung von Gleitstein und Verbindungselement kann die Gelenkverbindung folglich blockiert werden. Dies ermöglicht ein genaues Einstellen und Nachjustieren der Gleitsteinführung bei der Montage.

Eine vorteilhafte Ausführungsform der erfindungsgemäßen Verstellvorrichtung zeichnet sich dadurch aus, dass die Gelenkverbindung nach Art eines Kugelgelenks mit Gelenkkopf und Gelenkpfanne ausgebildet ist. Eine solche Ausbildung der Gelenkverbindung ermöglicht eine robuste, konstruktiv einfache Verbindungsanordnung. Vorteilhafterweise ist dabei der Gelenkkopf an dem Verbindungselement und die Gelenkpfanne an dem Gleitstein angeordnet.

Eine bevorzugte Ausführungsform der erfindungsgemäßen Verstellvorrichtung sieht vor, dass der Gelenkkopf in der Gelenkpfanne des Gleitsteins verspannt ist, insbesondere um die Gelenkverbindung zu blockieren. Dies bedeutet allgemein, dass die gelenkige Verbindung zwischen Gleitstein und Verbindungselement in ihrer Beweglichkeit einstellbar ist, vorzugsweise stufenlos.

Vorteilhafterweise ist in dem Gelenkkopf ein Spreizmittel zum wahlweisen Aufweiten des Gelenkkopfes vorgesehen, um die genannte Verspannung zu bewirken.

Eine weitere bevorzugte Ausführungsform der erfindungsgemäßen Verstellvorrichtung ist dadurch gekennzeichnet, dass an dem Gleitstein mindestens ein Durchbruch vorgesehen ist, durch welchen ein Werkzeug zum Betätigen des Spreizmittels einführbar ist, wobei der Durchbruch an einer der Spindel abgewandten Seite des Gleitsteins vorgesehen sein kann.

Vorteilhafterweise ist an dem Gleitstein ein Justierelement angeordnet zum Zentrieren und/oder Neutralstellen des Gleitsteins. Dieses Justierelement kann beispielsweise nach Art eines Dichtelementes, vorzugsweise einer O-Ringdichtung, ausgebildet sein.

Eine alternative bevorzugte Ausführungsform der erfindungsgemäßen Verstellvorrichtung sieht vor, dass der Gleitstein ein elastisches Gelenkelement umfasst, welches eine Gelenkverbindung nach Art eines Gummilagers ausbildet. Eine derartige Ausführungsvariante bietet insbesondere den Vorteil, dass sich die Verwendung eines Gummilagers vorteilhaft auf die Geräuschentwicklung auswirkt. Darüber hinaus ist ein Gummilager einfach und kostengünstig herzustellen und im Betrieb wartungsfrei.

Vorteilhafterweise umfasst der Gleitstein flächige Gleitelemente, welche direkt an dem elastischen Gelenkelement angeordnet sein können. Dies bietet den Vorteil eines einfachen, integralen Aufbaus.

Eine bevorzugte Ausführungsform der erfindungsgemäßen Verstellvorrichtung im Zusammenhang mit der Ausbildung des Gummilagers sieht vor, dass der Gleitstein ein Befestigungselement aufweist, welches zur Anordnung des Gleitsteins an dem Verbindungselement ausgebildet ist. Vorteilhafter Weise ist das Befestigungselement in dem elastischen Gelenkelement eingebettet, wobei das Befestigungselement als Innenhülse ausgebildet sein kann.

Eine bevorzugte Ausführungsform der erfindungsgemäßen Verstellvorrichtung sieht vor, dass an dem Gleitstein eine Halterung für einen Sensorimpulsgeber, vorzugsweise für einen Magneten, vorgesehen ist. Dies bietet den Vorteil der Integration zweier Funktionen in einem Bauteil. Der Gleitstein dient einerseits dazu, in der Axialführung zu laufen, und andererseits dient er zum Befestigen einer Aufnahme bzw. Halterung für einen Sensorimpulsgeber. Dies ermöglicht eine platzsparende Konstruktion der gesamten Verstellvorrichtung. Der Sensorimpulsgeber bzw. der zugehörige Sensor dient insbesondere zum Erfassen der Stellung des Gleitsteins und damit zur Überwachung der Funktion der Verstellvorrichtung. Die Integration dieser beiden Funktionen innerhalb eines Bauteils ist jedoch nicht zwingend erforderlich, es liegt vielmehr ebenfalls im Rahmen der Erfindung, den Sensorimpulsgeber gesondert an der Spindel anzuordnen.

Vorteilhafterweise umfasst die genannte Halterung mindestens eine Rastnase, welche bei einem Verbinden der Halterung mit einem Gleitstein mit einer komplementären Raststruktur des Gleitsteins zusammenwirkt. Die Anordnung der Halterung mittels Rastnasen an einer Raststruktur des Gleitsteines nach Art einer Klipsverbindung ermöglicht eine lösbare Verbindungsanordnung, welche leicht montierbar und wieder austauschbar ist und welche dennoch - in einem montierten Zustand - die beiden Bauteile Gleitstein und Sensorimpulsgeber zuverlässig und dauerhaft miteinander verbindet.

Eine bevorzugte Ausführungsform der erfindungsgemäßen Verstellvorrichtung ist dadurch gekennzeichnet, dass die Verstellvorrichtung als Lenker oder Teil eines Lenkers für das Fahrwerk des Fahrzeugs ausgebildet ist. Aufgrund des erfindungsgemäß vermiedenen Verkantens eignet sich Untersuchungen der Anmelderin zufolge die erfindungsgemäße Verstellvorrichtung insbesondere für den Einsatz bei Lenkern und Lenkerteilen eines Fahrzeugs.

Die vorstehend beschriebene Verstellvorrichtung findet vorteilhafterweise in einem Fahrwerk Verwendung. Die Verwendung in einem Fahrwerk zeichnet sich dadurch aus, dass die Verstellvorrichtung Teil einer Hinterradlenkung des Fahrwerks ist, so dass durch die Verstellvorrichtung die Änderung des Lenkwinkels an der Hinterachse möglich ist. Die Vorrichtung kann aber auch an der Vorderachse zur dortigen Änderung des Lenkwinkels zum Einsatz gelangen. Wenn die Verstellvorrichtung als Lenker oder Teil eines Lenkers für das Fahrwerk des Fahrzeugs ausgebildet ist, kann diese mit einem Radlager zusammenwirken und somit die Verstellung des jeweiligen Rades oder auch beider Räder bewirken. Die Verbindung zwischen der Vorrichtung und mindestens einem Radlager ist über geeignete Gelenke, vorzugsweise Kugelgelenke ausgebildet.

Weitere Vorteile und Eigenschaften lassen sich im Folgenden anhand von Ausführungsbeispielen und den Figuren erläutern. Dabei zeigt
Figur 1 eine perspektivische Gesamtdarstellung einer erfindungsgemäßen Verstellvorrichtung im montierten Zustand;
Figur 2 eine Darstellung des Gleitsteins der Verstellvorrichtung aus Figur 1 in einem an einer Spindel montierten Zustand;
Figur 3 eine Darstellung eines anderen Gleitsteins in seinem an der Spindel montierten Zustand;
Figur 4 eine perspektivische Ansicht einer erfindungsgemäßen Verstellvorrichtung mit Gleitstein und Axialführung;
Figur 5 eine Darstellung einer Laufbahn für den Gleitstein in der Axialführung einer erfindungsgemäßen Verstellvorrichtung;
Figur 6 eine Explosionsdarstellung von Teilen der erfindungsgemäßen Verstellvorrichtung aus Figur 1 mit Gleitstein, Verbindungselement und Spindel;
Figur 7 eine Schnittdarstellung der erfindungsgemäßen Verstellvorrichtung gemäß Figur 6 im montierten Zustand;
Figur 8 eine Explosionsdarstellung einer alternativen erfindungsgemäßen Verstellvorrichtung mit Gleitstein, Verbindungselement und Spindel;
Figur 9 eine Schnittansicht der erfindungsgemäßen Verstellvorrichtung gemäß Figur 8;
Figur 10 eine Schnittdarstellung des Gleitsteines einer erfindungsgemäßen Verstellvorrichtung;
Figur 11 Darstellungen einer alternativen Ausführungsform von Verbindungselement und Gleitstein;
Figur 12 den Gleitstein gemäß Figur 11 in seinem an einer Spindel montierten Zustand;
Figur 13 eine Schnittdarstellung des an der Spindel montierten Gleitsteines gemäß Figur 12 und;
Figur 14 eine Draufsicht auf den Gleitstein gemäß den Figuren 12 und 13 im montierten Zustand.

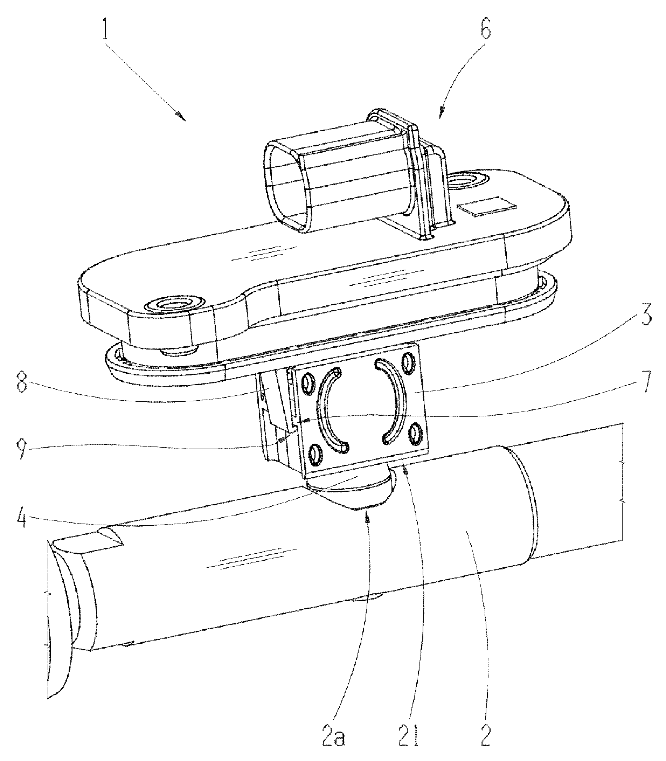

Die Figuren 1-5 zeigen verschiedene Darstellungen einer erfindungsgemäßen Verstellvorrichtung bzw. von Elementen davon und werden nachfolgend gemeinsam beschrieben.

Die Verstellvorrichtung 1 umfasst eine Spindel 2, welche Spindel 2 eine Aufnahme 2a für ein Verbindungselement 4 aufweist. Das Verbindungselement 4 verbindet einen Gleitstein 3 mit der Spindel 2. Oberhalb des Gleitsteines 3 ist ein Sensorelement 6 angeordnet.

Der Gleitstein 3 weist in Axialrichtung der Spindel 2 zu beiden Enden eine Raststruktur 7 auf. Die Raststruktur 7 steht in Wirkverbindung mit einer Halterung 8, welche Halterung 8 Rastnasen 9 aufweist, welche mit Raststruktur 7 des Gleitsteines 3 verrasten, um die Halterung 8 an dem Gleitstein 3 zu befestigen.

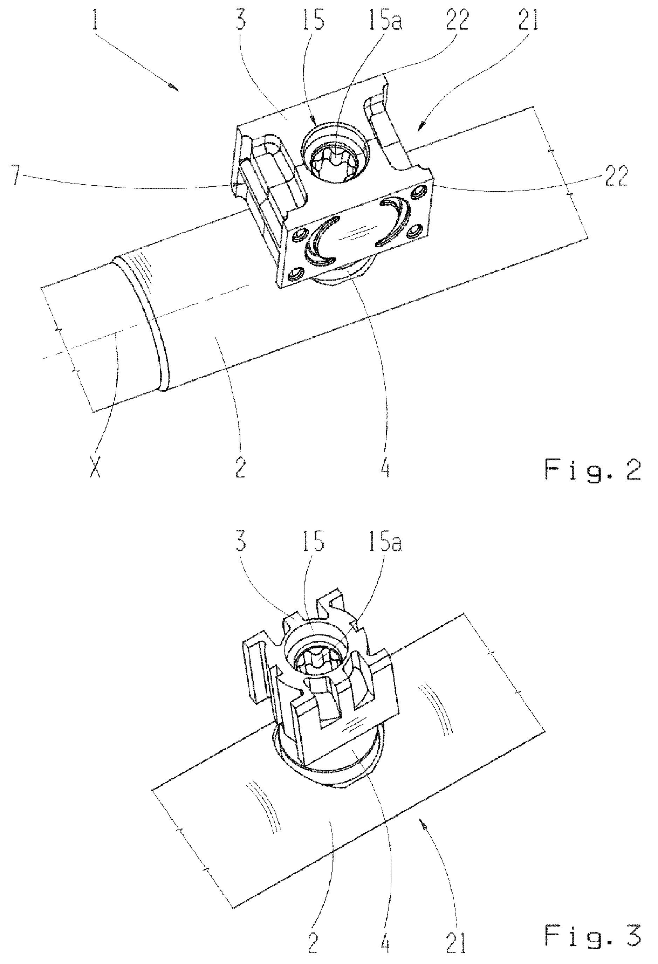

Figur 2 zeigt eine vergrößerte Darstellung des Gleitsteines 3 aus Figur 1, jedoch ohne das Sensorelement 6 und ohne die Halterung 8. Hierdurch ist die Raststruktur 7 des Gleitsteines 3 besser zu erkennen. Figur 3 zeigt eine alternative Ausgestaltung des Gleitsteins 3.

In den Figuren 2 und 3 ist ergänzend zur Figur 1 an dem Gleitstein 3 ein Durchbruch 15 oder eine Öffnung zu erkennen, der bzw. die zum Einführen eines speziellen Werkzeuges, speziell mit Torx-Profil, zum Betätigen eines Spreizmittels 15a für das Verbindungselement 4, worauf weiter unten noch eingegangen wird.

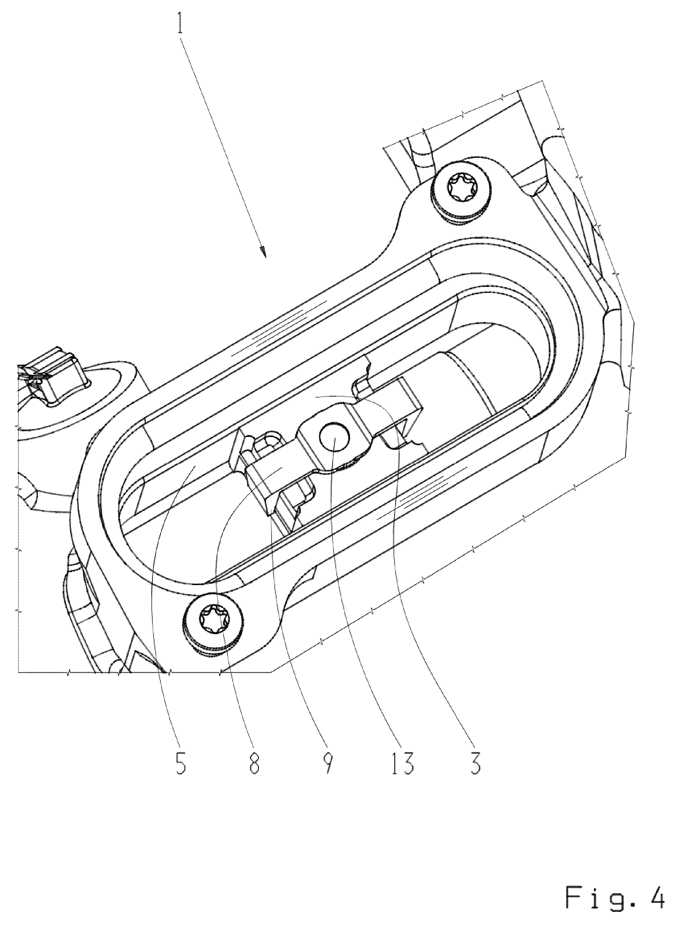

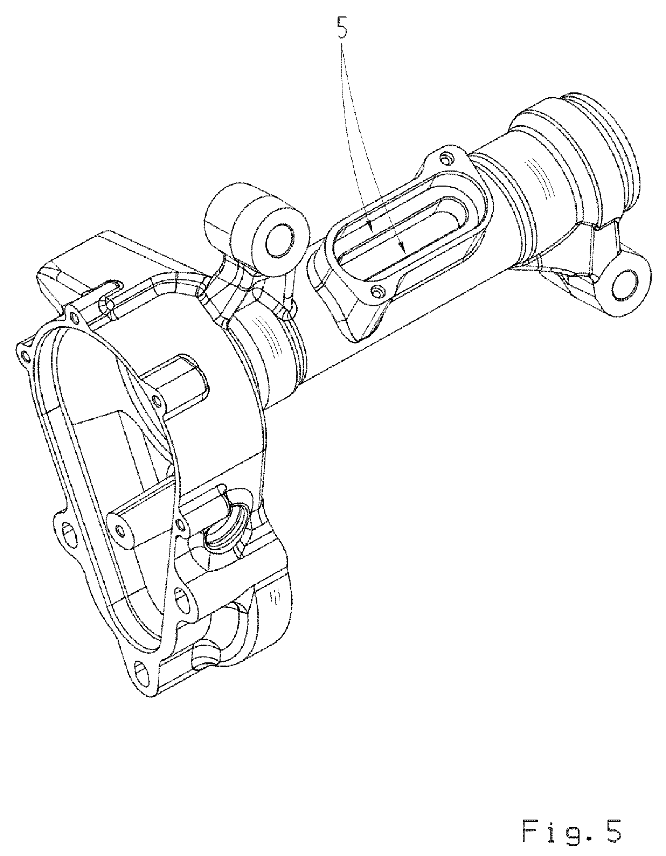

Das Sensorelement 6 umfasst eine Führung 5 für den Gleitstein 3, welche Führung 5 insbesondere in den Figuren 4 und 5 dargestellt ist. Die Führung 5 begrenzt die Bewegungsbahn des Gleitsteines 3 und führt ihn in axialer Richtung der Spindel 2. Die Führung 5 wird daher auch als Axialführung bezeichnet. Der Gleitstein 3 weist Gleitflächen 22 auf (siehe insbesondere Figur 2), welche in bzw. an der Führung 5 gleiten.

Das Sensorelement 6 wechselwirkt mit einem Sensorimpulsgeber 13, welcher Sensorimpulsgeber 13 beispielsweise in Figur 4 zu sehen ist, wobei Figur 4 eine Draufsicht auf die Verstellvorrichtung gemäß Figur 1 zeigt, jedoch ohne Sensorelement. Der Sensorimpulsgeber 13 ist in der Halterung 8 angeordnet, welche Halterung 8 wiederum mit ihren Rastnasen 9 in die Raststruktur 7 des Gleitsteines 3 eingerastet ist. Der Sensorimpulsgeber 13 kann vorzugsweise als Magnet (Permanentmagnet) ausgebildet sein.

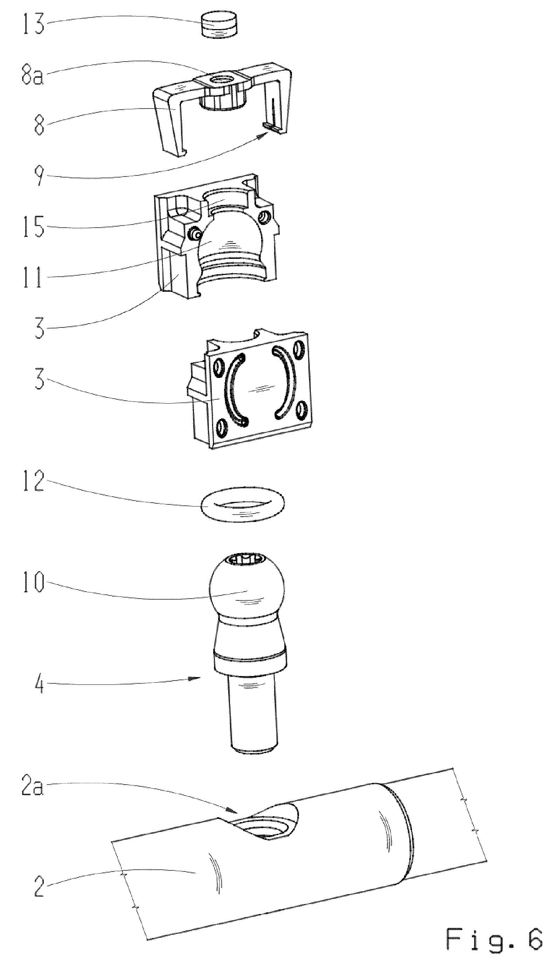

Figur 6 zeigt eine Explosionsdarstellung einzelner Bestandteile der Verstellvorrichtung gemäß Figur 1, jedoch ohne Sensorelement 6. Die Spindel 2 weist wiederum eine Aufnahmeöffnung 2a auf. Oberhalb der Spindel 2 zeigt Figur 6 das Verbindungselement 4, welches Verbindungselement 4 einen Gelenkkopf 10 aufweist. Oberhalb des Verbindungselementes 4 ist ein Justierelement 12 nach Art eines O-Rings abgebildet. Oberhalb des Justierelementes 12 ist sind zwei verschiedene Ansichten ein und desselben Gleitsteines 3 in einer Seitenansicht und in einer Schnittansicht abgebildet, wobei der Gleitstein 3 eine Gelenkpfanne 11 aufweist. Darüber befindet sich die obenstehend beschriebene Halterung 8 mit den Rastnasen 9 zur Aufnahme des Sensorimpulsgebers 13 bei Bezugszeichen 8a. Ganz oben in Figur 6 ist ein Sensorimpulsgeber 13 abgebildet.

Bei der Montage des Gleitsteines 3 an der Spindel 2 wird zunächst das Verbindungselement 4 mit seinem zylindrischen Ende in die Aufnahmeöffnung 2a der Spindel 2 eingesetzt. An dem Verbindungselement 4 wird anschließend das Justierelement 12 angeordnet. Der Gleitstein 3 wird anschließend mit der Gelenkpfanne 11 auf den Gelenkkopf 10 des Verbindungselementes 4 aufgesetzt. Die Rastnasen 9 der Halterung 8 rasten im Anschluss daran in die Raststruktur 7 des Gleitsteines 3 ein. Im letzten Schritt wird der Sensorimpulsgeber 13 bei 8a in die Halterung 8 eingebracht.

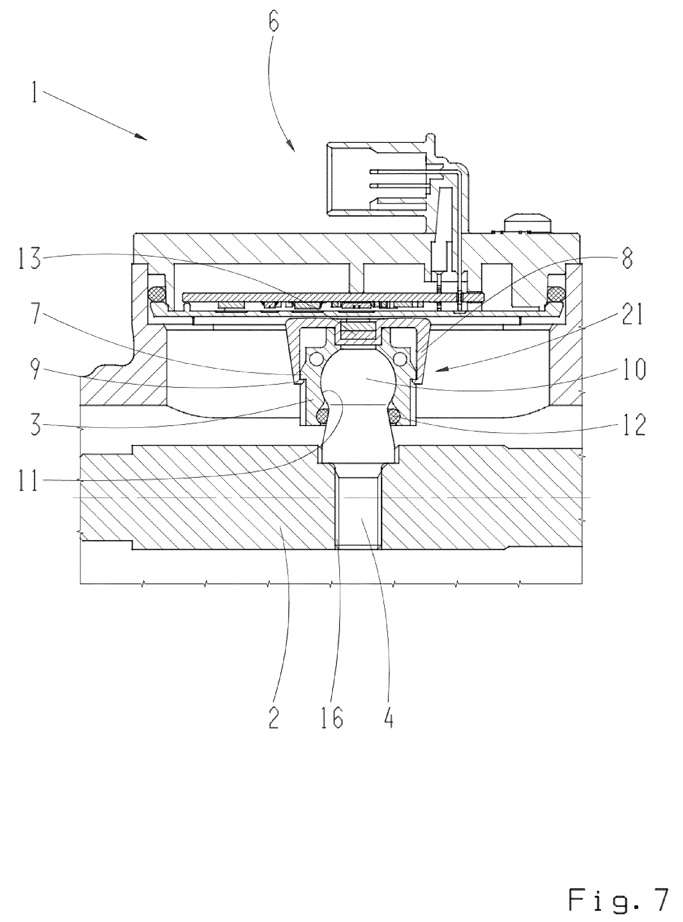

Figur 7 zeigt eine Schnittdarstellung der Verstellvorrichtung 1 gemäß Figur 6 in einem montierten Zustand. In ein Gewinde 16 der Spindel 2 im Bereich der Aufnahme 2a ist das Verbindungselement 4 eingeschraubt. Das Verbindungselement 4 weist einen Gelenkkopf 10 auf. Unterhalb des Gelenkkopfes 10 ist ein Justierelement 12 angeordnet. An dem Gelenkkopf 10 ist der Gleitstein 3 angeordnet. Die Raststruktur 7 des Gleitsteines 3 steht mit den Rastnasen 9 der Halterung 8 in Wirkverbindung. Oberhalb des Gleitsteines 3 ist das Sensorelement 6 angeordnet.

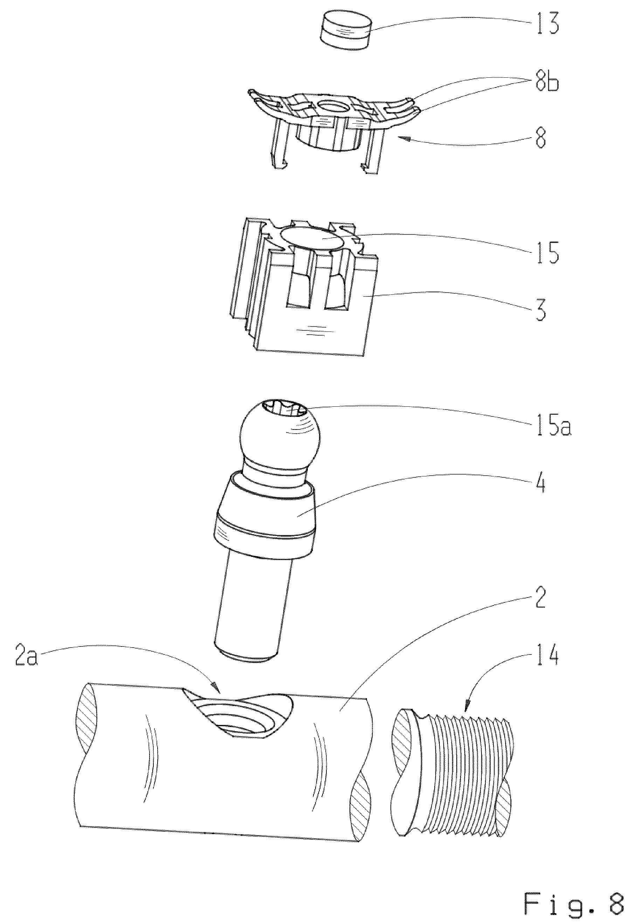

Figur 8 zeigt eine alternative Ausgestaltung der Anordnung aus Figur 6, insbesondere im Bereich der Halterung 8. Die Halterung 8 weist bei dieser Ausgestaltung an ihrer dem Gleitstein 3 abgewandten Oberseite seitlich flügelartige Elemente 8b auf. Weiterhin ist in Figur 8 das Gewinde 14 der Spindel 2 mit dargestellt.

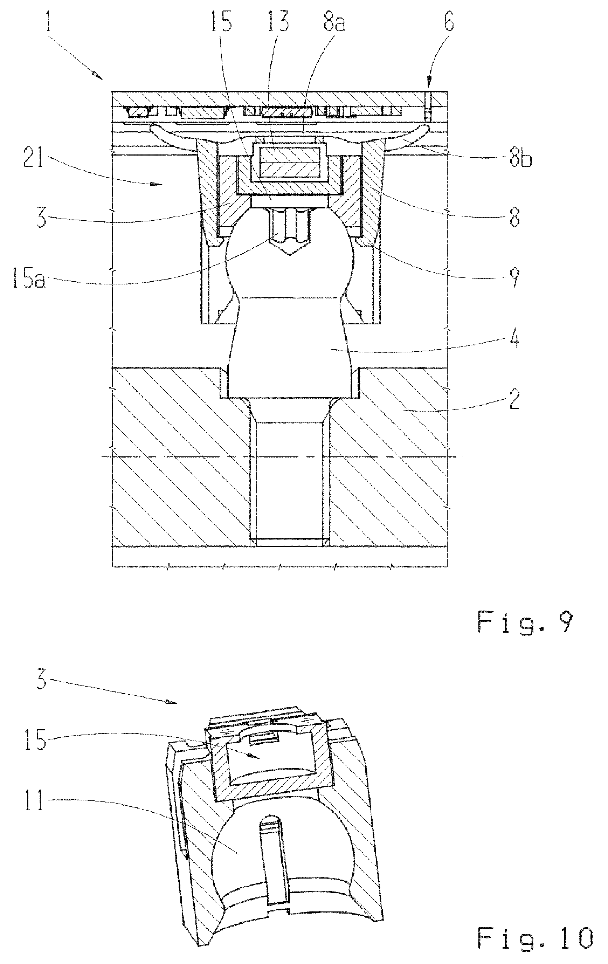

Figur 9 zeigt eine Schnittansicht der erfindungsgemäßen Verstellvorrichtung 1 gemäß Figur 8 in einem montierten Zustand.

Figur 10 zeigt eine Schnittdarstellung des Gleitsteines 3 mit Montageöffnung 15 zum Betätigten des Spreizmittels (nicht gezeigt) zum Blockieren des Kugelgelenks (Gelenkpfanne 11).

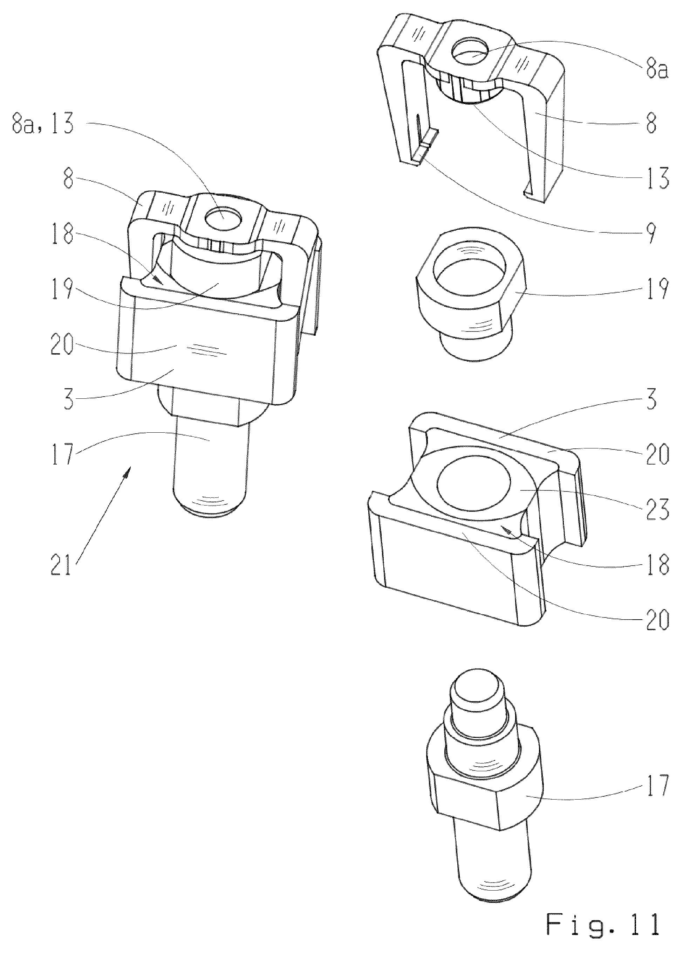

Die Figuren 11-14 zeigen eine alternative Ausführungsform der erfindungsgemäßen Verstellvorrichtung 1 und werden daher gemeinsam beschrieben.

Figur 11 zeigt eine Explosionsdarstellung einer alternativen Ausführungsform der Gleitsteinanbindung sowie eine Darstellung der Einzelteile im montierten Zustand. Unten in Figur 11 ist ein alternatives Verbindungselement 17 dargestellt. Oberhalb des Verbindungselementes 17 ist ein Gleitstein mit einem integrierten Gummilager (elastisches Gelenkelement) 18 abgebildet. Oberhalb des Gummilagers ist ein Befestigungselement 19 abgebildet. Ganz oben rechts in Figur 11 ist die Halterung 8 mit Rastnasen 7 und Aufnahme 8a für den Impulsgeber 13 abgebildet, wie bereits aus Figur 1 bekannt. Das Gummilager bzw. Gelenkelement 18 verbindet eine Innenhülse 23, vorzugsweise aus Metall, zum Aufnehmen des Verbindungselements 17 mit den Gleitflächen (Gleitkufen) 20. Die Kufen 20 sind beispielsweise aus einem Kunststoff gefertigt. Das Verbindungselement 17 ist beispielsweise aus Stahl gefertigt.

Die links abgebildete Teildarstellung in Figur 11 zeigt die einzelnen Elemente in einem zusammengebauten Zustand. Das Verbindungselement 17 ist mit seinem freien Ende in der Innenhülse 23 aufgenommen und mit dem Befestigungselement 19 verbunden. Die Halterung 8 nimmt den Impulsgeber 13 auf und verbinden diesen mit dem Gleitstein 3.

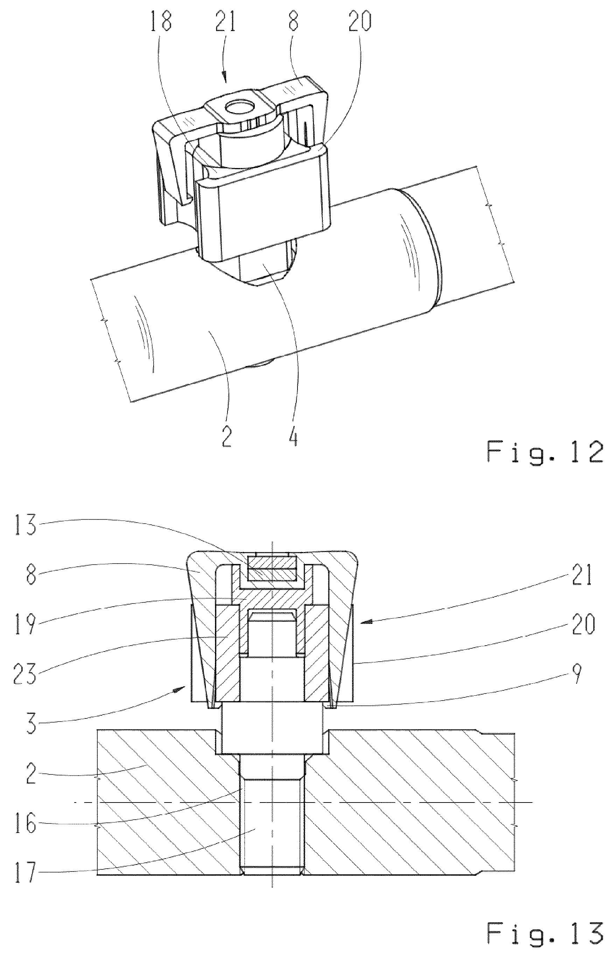

Figur 12 zeigt die Elemente aus Figur 11 in ihrem an der Spindel 2 montierten Zustand.

Figur 13 zeigt eine Schnittansicht der Anordnung aus Figur 12. Das Verbindungselement 17 ist in das Gewinde 16 der Spindel 2 eingeschraubt. An dem Verbindungselement 17 ist der Gleitstein 3 mit Gummilager angeordnet. Die Halterung 8, in welche ein Sensorimpulsgeber 13 eingelegt ist, steht in Wirkverbindung mit dem Gleitstein 3.

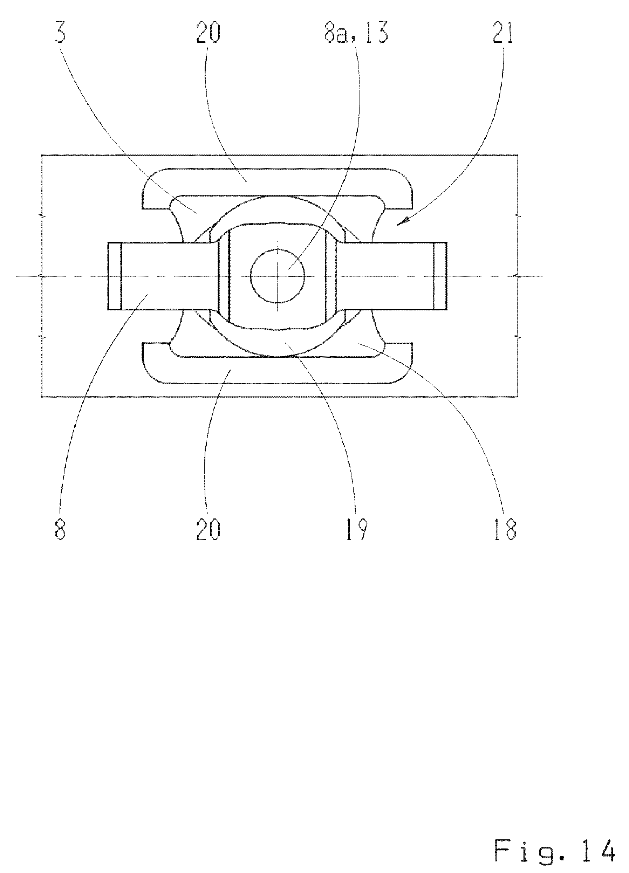

Figur 14 zeigt eine schematische Darstellung einer Draufsicht auf den Gleitstein 3. Zu sehen sind insbesondere die Kufen 20 und die Halterung 8. Zwischen Innenhülse (nicht gezeigt) und Kufen 20 befindet sich das Gummilager 18.

### Bezugszeichen

- 1: Verstellvorrichtung
- 2: Spindel
- 2a: Aufnahmeöffnung
- 3: Gleitstein
- 4: Verbindungselement
- 5: Führung
- 6: Sensorelement
- 7: Raststruktur
- 8, 8b: Halterung
- 8a: Aufnahme
- 9: Rastnasen
- 10: Gelenkkopf
- 11: Gelenkpfanne
- 12: Justierelement
- 13: Sensorimpulsgeber
- 14: Gewinde
- 15: Durchbruch
- 15a: Spreizmittel
- 16: Gewinde
- 17: Verbindungselement
- 18: Gummilager
- 19: Befestigungselement
- 20: Kufen
- 21: Gelenkverbindung
- 22: Gleitfläche
- 23: Innenhülse
- X: Spindelachse

## Patentansprüche

1. Verstellvorrichtung (1) für ein Fahrwerk eines Fahrzeugs, umfassend mindestens eine Spindel (2), mindestens einen Gleitstein (3), eine Axialführung (5) für den Gleitstein (3) und mindestens ein Verbindungselement (4, 17), welches Verbindungselement (4, 17) einerseits drehfest an der Spindel (2) angeordnet und andererseits mit dem Gleitstein (3) verbunden ist, **dadurch gekennzeichnet, dass** zwischen dem Verbindungselement (4, 17) und dem Gleitstein (3) eine Gelenkverbindung (21) vorgesehen ist.

2. Verstellvorrichtung (1) nach Anspruch 1, **dadurch gekennzeichnet, dass** an dem Gleitstein (3) eine Halterung (8) für einen Sensorimpulsgeber (13), vorzugsweise einen Magneten, vorgesehen ist.

3. Verstellvorrichtung (1) nach Anspruch 2, **dadurch gekennzeichnet, dass** die Halterung (8) mindestens eine Rastnase (9) umfasst, welche bei einem Verbinden mit dem Gleitstein (3) mit einer komplementären Raststruktur (7) des Gleitsteins (3) zusammenwirkt.

4. Verstellvorrichtung (1) nach mindestens einem der vorangegangenen Ansprüche, **dadurch gekennzeichnet, dass** ein Abstand der Gelenkverbindung (21) von der Spindelachse (X) im Bereich 5-50mm, vorzugsweise im Bereich 10-30mm, höchst vorzugsweise im Bereich 15-25mm, liegt.

5. Verstellvorrichtung (1) nach mindestens einem der vorangegangenen Ansprüche, **dadurch gekennzeichnet, dass** der Gleitstein (3) zumindest mit seinen mit der Axialführung (5) in Kontakt stehenden Gleitflächen (22) aus dem Werkstoff Polyacetal oder einem hochtemperaturfesten Material, vorzugsweise PTFE oder PPS oder PPS GF40 PTFE5, ausgebildet ist.

6. Verstellvorrichtung (1) nach Anspruch 1, **dadurch gekennzeichnet, dass** die Gelenkverbindung (21) ein Gelenk aufweist, welches blockierbar ist.

7. Verstellvorrichtung (1) nach mindestens einem der vorangegangenen Ansprüche, **dadurch gekennzeichnet, dass** die Gelenkverbindung (21) nach Art eines Kugelgelenks mit Gelenkkopf (10) und Gelenkpfanne (11) ausgebildet ist.

8. Verstellvorrichtung (1) nach Anspruch 7, **dadurch gekennzeichnet, dass** der Gelenkkopf (10) an dem Verbindungselement (4) und die Gelenkpfanne (11) an dem Gleitstein (3) angeordnet ist.

9. Verstellvorrichtung (1) nach Anspruch 7 oder 8, **dadurch gekennzeichnet, dass** der Gelenkkopf (10) in der Gelenkpfanne (11) des Gleitsteins (3) verspannbar ist.

10. Verstellvorrichtung (1) nach Anspruch 9, **dadurch gekennzeichnet, dass** in dem Gelenkkopf (10) ein Spreizmittel (15a) zum wahlweisen Aufweiten des Gelenkkopfes (10) vorgesehen ist.

11. Verstellvorrichtung (1) nach Anspruch 10, **dadurch gekennzeichnet, dass** an dem Gleitstein (3) mindestens ein Durchbruch (15) vorgesehen ist, durch welchen ein Werkzeug zum Betätigen des Spreizmittels (15a) einführbar ist, insbesondere, dass der Durchbruch (15) an einer der Spindel (2) abgewandten Seite des Gleitsteins (3) vorgesehen ist.

12. Verstellvorrichtung (1) nach mindestens einem der vorangegangenen Ansprüche, **dadurch gekennzeichnet, dass** an dem Gleitstein (3) ein Justierelement (12) angeordnet ist zum Zentrieren und/oder Neutralstellen des Gleitsteins (3).

13. Verstellvorrichtung (1) nach mindestens einem der Ansprüche 1 bis 6, **dadurch gekennzeichnet, dass** der Gleitstein (3) ein elastisches Gelenkelement umfasst, zur Ausbildung der Gelenkverbindung (21) nach Art eines Gummilagers (18).

14. Verstellvorrichtung (1) nach zumindest Anspruch 13, **dadurch gekennzeichnet; dass** der Gleitstein (3) flächige Gleitelemente (20) umfasst, welche an dem elastischen Gelenkelement (18) angeordnet sind.

15. Verstellvorrichtung (1) nach Anspruch 13 oder 14, **dadurch gekennzeichnet, dass** der Gleitstein (3) wenigstens ein Befestigungselement (19, 23) aufweist, welches zur Anordnung des Gleitsteins (3) an dem Verbindungselement (17) ausgebildet ist, insbesondere, dass das Befestigungselement (23) in dem elastischen Gelenkelement (18) eingebettet ist, vorzugsweise dass das Befestigungselement als Innenhülse (23) ausgebildet ist.

## Claims

1. Adjustment device (1) for a chassis of a vehicle, comprising at least one spindle (2), at least one sliding block (3), an axial guide (5) for the sliding block (3), and at least one connecting element (4, 17), which connecting element (4, 17) is, at one side, arranged rotationally conjointly on the spindle (2) and, at the other side, connected to the sliding block (3), **characterized in that** an articulated connection (21) is provided between the connecting element (4, 17) and the sliding block (3).

2. Adjustment device (1) according to Claim 1, **characterized in that**, on the sliding block (3), there is provided a holder (8) for a sensor pulse generator (13), preferably a magnet.

3. Adjustment device (1) according to Claim 2, **characterized in that** the holder (8) comprises at least one detent lug (9) which, during a process of connection to the sliding block (3), interacts with a complementary detent structure (7) of the sliding block (3).

4. Adjustment device (1) according to at least one of the preceding claims, **characterized in that** a spacing of the articulated connection (21) from the spindle axis (X) lies in the range 5-50 mm, preferably in the range 10-30 mm, most preferably in the range 15-25 mm.

5. Adjustment device (1) according to at least one of the preceding claims, **characterized in that** the sliding block (3) is, at least at its sliding surfaces (22) which are in contact with the axial guide (5), composed of the material polyacetal or a high temperature-resistant material, preferably PTFE or PPS or PPS GF40 PTFE5.

6. Adjustment device (1) according to Claim 1, **characterized in that** the articulated connection (21) has a joint which can be blocked.

7. Adjustment device (1) according to at least one of the preceding claims, **characterized in that** the articulated connection (21) is formed in the manner of a ball joint with joint head (10) and joint socket (11).

8. Adjustment device (1) according to Claim 7, **characterized in that** the joint head (10) is arranged on the connecting element (4) and the joint socket (11) is arranged on the sliding block (3).

9. Adjustment device (1) according to Claim 7 or 8, **characterized in that** the joint head (10) can be braced in the joint socket (11) of the sliding block (3).

10. Adjustment device (1) according to Claim 9, **characterized in that**, in the joint head (10), there is provided an expansion means (15a) for the selective expansion of the joint head (10).

11. Adjustment device (1) according to Claim 10, **characterized in that**, on the sliding block (3), there is provided at least one aperture (15) through which a tool for actuating the expansion means (15a) can be inserted, in particular **in that** the aperture (15) is provided on a side, which is averted from the spindle (2), of the sliding block (3).

12. Adjustment device (1) according to at least one of the preceding claims, **characterized in that** an alignment element (12) is arranged on the sliding block (3) for the purposes of centring the sliding block (3) and/or placing the sliding block (3) in a neutral position.

13. Adjustment device (1) according to at least one of Claims 1 to 6, **characterized in that** the sliding block (3) comprises an elastic joint element for forming the articulated connection (21) in the manner of a rubber mount (18).

14. Adjustment device (1) according to at least Claim 13, **characterized in that** the sliding block (3) comprises areal slide elements (20) which are arranged on the elastic joint element (18).

15. Adjustment device (1) according to Claim 13 or 14, **characterized in that** the sliding block (3) has at least one fastening element (19, 23) which is designed for the arrangement of the sliding block (3) on the connecting element (17), in particular in that the fastening element (23) is embedded in the elastic joint element (18), preferably **in that** the fastening element is in the form of an inner sleeve (23).

## Revendications

1. Dispositif de réglage (1) pour un châssis d'un véhicule, comprenant au moins une broche (2), au moins une bride coulissante (3), un guidage axial (5) pour la bride coulissante (3) et au moins un élément de liaison (4, 17), ledit élément de liaison (4, 17) étant d'une part calé en rotation sur la broche (2) et d'autre part relié à la bride coulissante (3), **caractérisé en ce qu'**il est prévu une liaison articulée (21) entre l'élément de liaison (4, 17) et la bride coulissante (3).

2. Dispositif de réglage (1) selon la revendication 1, **caractérisé en ce qu'**il est prévu sur la bride coulissante (3) un support (8) pour un générateur d'impulsions de capteur (13), de préférence un aimant.

3. Dispositif de réglage (1) selon la revendication 2, **caractérisé en ce que** le support (8) comprend au moins un ergot d'encliquetage (9), qui coopère avec une structure d'encliquetage complémentaire (7) de la bride coulissante (3) lors d'une liaison avec la bride coulissante (3).

4. Dispositif de réglage (1) selon au moins une des revendications précédentes, **caractérisé en ce qu'**une distance entre la liaison articulée (21) et l'axe de la broche (X) se situe dans la plage de 5 à 50 mm, de préférence dans la plage de 10 à 30 mm, et de préférence encore dans la plage de 15 à 25 mm.

5. Dispositif de réglage (1) selon au moins une des revendications précédentes, **caractérisé en ce que** la bride coulissante (3) est constituée, au moins dans ses faces de glissement (22) venant en contact avec le guidage axial (5), du matériau polyacétal ou d'un matériau résistant à haute température, par exemple de PTFE ou de PPS ou de PPS GF40 PTFE5.

6. Dispositif de réglage (1) selon la revendication 1, **caractérisé en ce que** la liaison articulée (21) présente une articulation, qui peut être bloquée.

7. Dispositif de réglage (1) selon au moins une des revendications précédentes, **caractérisé en ce que** la liaison articulée (21) est réalisée à la manière d'une rotule avec une tête d'articulation (10) et une cuvette d'articulation (11).

8. Dispositif de réglage (1) selon la revendication 7, **caractérisé en ce que** la tête d'articulation (10) est disposée sur l'élément de liaison (4) et la cuvette d'articulation (11) est disposée sur la bride coulissante (3).

9. Dispositif de réglage (1) selon la revendication 7 ou 8, **caractérisé en ce que** la tête d'articulation (10) peut être serrée dans la cuvette d'articulation (11) de la bride coulissante (3).

10. Dispositif de réglage (1) selon la revendication 9, **caractérisé en ce qu'**il est prévu dans la tête d'articulation (10) un moyen d'expansion (15a) pour l'élargissement sélectif de la tête d'articulation (10).

11. Dispositif de réglage (1) selon la revendication 10, **caractérisé en ce qu'**il est prévu sur la bride coulissante (3) au moins un passage (15), à travers lequel un outil permettant d'actionner le moyen d'expansion (15a) peut être introduit, en particulier le passage (15) est prévu sur un côté de la bride coulissante (3) situé à l'opposé de la broche (2).

12. Dispositif de réglage (1) selon au moins une des revendications précédentes, **caractérisé en ce qu'**un élément d'ajustement (12) est disposé sur la bride coulissante (3) pour le centrage et/ou le positionnement neutre de la bride coulissante (3).

13. Dispositif de réglage (1) selon au moins une des revendications 1 à 6, **caractérisé en ce que** la bride coulissante (3) comprend un élément d'articulation élastique, pour la formation de la liaison articulée (21) à la manière d'un palier en caoutchouc (18).

14. Dispositif de réglage (1) selon au moins la revendication 13, **caractérisé en ce que** la bride coulissante (3) comprend des éléments glissants plats (20), qui sont disposés sur l'élément d'articulation élastique (18).

15. Dispositif de réglage (1) selon la revendication 13 ou 14, **caractérisé en ce que** la bride coulissante (3) présente au moins un élément de fixation (19, 23), qui est conçu pour l'agencement de la bride coulissante (3) sur l'élément de liaison (17), en particulier **en ce que** l'élément de fixation (23) est noyé dans l'élément d'articulation élastique (18), de préférence **en ce que** l'élément de fixation est réalisé en forme de douille intérieure (23).
